# FASCICULE DE BREVET EUROPEEN

(11) **EP 2 751 922 B1**
(45) Date de publication et mention de la délivrance du brevet: **13.06.2018**
(21) Numéro de dépôt: 12750488.4
(22) Date de dépôt: 01.08.2012
(51) Int. Cl.: F02D 29/06, H02P 9/10, H02P 9/04

(54) **PROCÉDÉ DE RÉGULATION DU FONCTIONNEMENT D'UN GROUPE ÉLECTROGÈNE**
VERFAHREN ZUR REGELUNG DES BETRIEBS EINES SATZES VON ELEKTRISCHEN GENERATOREN
METHOD FOR REGULATING THE OPERATION OF AN ELECTRIC GENERATOR SET

(30) Priorité: 01.09.2011 FR 1157724
(43) Date de publication de la demande: 09.07.2014
(73) Titulaire: Moteurs Leroy-Somer, 16000 Angouleme (FR)
(72) Inventeur: MOSER, Samuel, F-16160 Gond-Pontouvre (FR); ANDREJAK, Jean-Marie, F-16710 Saint Yrieix (FR); BETGE, Patrice, F-16340 L' Isle d' Espagnac (FR)
(74) Mandataire: Nony
(86) Numéro de dépôt international: PCT/IB2012/053923
(87) Numéro de publication internationale: WO 2013/030694

(56) Documents cités:
- WO-A1-95/05026
- CA-A1- 2 454 848
- US-A- 5 006 781
- US-A1- 2010 241 283

## Description

La présente invention concerne la régulation des alternateurs.

Les moteurs d'entrainement des groupes électrogènes sont équipés de régulateurs de vitesse électroniques, intégrés au système d'injection de carburant du moteur. La régulation de la vitesse de ces moteurs repose entre autres sur la mesure de la vitesse de rotation de l'arbre du moteur par un capteur comptant le nombre de dents d'une couronne dentée passant devant le capteur.

Un calculateur d'injection du calculateur de vitesse détermine grâce au signal délivré par ce capteur le niveau d'injection de carburant de façon à maintenir la vitesse à une valeur prédéfinie, mais n'a pas une connaissance directe du niveau de charge qui est appliqué au moteur, car aucun moyen économique n'existe pour informer le calculateur de ce niveau de charge.

Chaque variation de charge appliquée au moteur, que ce soit une augmentation ou une diminution, se traduit par une diminution ou une augmentation transitoire du régime moteur que le régulateur de vitesse tente de corriger par un niveau d'injection adéquat.

Dans les groupes électrogènes connus, c'est seulement grâce à la connaissance de la vitesse et du niveau d'injection que le calculateur détermine le niveau de charge qui est appliqué au moteur.

Il est connu du brevet US 5 703 410 de contrôler le courant d'excitation d'un alternateur et l'injection de carburant à partir de la connaissance de la tension redressée en sortie de l'alternateur.

Il est également connu de la demande EP 1 938 447 de commander l'actionneur d'admission de carburant d'un groupe électrogène grâce à un dispositif de contrôle délivrant un signal de commande se substituant à un signal de sortie du régulateur de vitesse lorsqu'une variation de charge est détectée.

Des moteurs à turbocompresseur sont de plus en plus utilisés au sein de groupes électrogènes.

Un inconvénient de ces moteurs est la dégradation de leurs performances si la turbocompression ne peut pas être lancée correctement. Or, une augmentation brutale de la charge est susceptible de ralentir trop fortement le moteur pour un fonctionnement correct de celui-ci.

Il existe un besoin pour améliorer encore les performances des groupes électrogènes, notamment lors d'augmentations de la charge, afin entre autres de faciliter l'utilisation de moteurs à turbocompresseur.

L'invention vise à répondre au moins en partie à ce besoin et y parvient, selon l'un de ses aspects, grâce à un procédé de régulation de l'injection de carburant dans un moteur thermique d'un groupe électrogène comprenant un alternateur entraîné par le moteur thermique, le groupe électrogène comportant au moins un capteur de vitesse du moteur thermique et mettant en oeuvre une boucle de régulation ayant en entrée au moins un signal provenant du capteur de vitesse, le procédé comportant les étapes suivantes :
- détecter une augmentation de la charge en sortie de l'alternateur à partir d'au moins une grandeur électrique en sortie de l'alternateur, et
- lorsqu'une augmentation de la charge est détectée, substituer à au moins une valeur délivrée par le capteur de vitesse en entrée de la boucle de régulation au moins une valeur prédéfinie.

Par « valeur prédéfinie » il faut comprendre une valeur constante ou une valeur calculée et pouvant varier en fonction de certains paramètres, par exemple le niveau de puissance. On peut ainsi tenir compte du comportement du moteur en fonction de la charge, ce comportement étant différent à l'état chargé et à vide.

Plusieurs valeurs prédéfinies peuvent être substituées en fonction du franchissement de plusieurs seuils respectifs, par exemple. Le calcul peut faire intervenir différents paramètres, par exemple le niveau de puissance.

Grâce à l'invention, en modifiant délibérément l'information provenant normalement du capteur de vitesse du moteur en entrée de la boucle de régulation, il est possible d'appliquer à la boucle de régulation une valeur anticipant l'évolution de la charge avant même que le capteur soit en mesure de la détecter et avant même que le moteur ait chuté en vitesse de façon sensible.

On peut ainsi, par exemple, augmenter l'injection de carburant dès que l'augmentation de la charge est détectée, sans attendre que cette augmentation de l'injection de carburant soit déclenchée par la détection d'un ralentissement de la vitesse du moteur par le régulateur de vitesse du moteur.

Par « injection de carburant », il faut comprendre de façon générale le contrôle de la puissance du moteur thermique.

Par « capteur de vitesse », il faut comprendre un capteur d'une grandeur représentative de la vitesse du moteur, par exemple un capteur délivrant des impulsions à une fréquence proportionnelle à la vitesse de rotation de l'arbre du moteur thermique.

La grandeur électrique en sortie de l'alternateur peut être représentative de l'un au moins du courant parcourant l'enroulement d'induit principal de l'alternateur, de la tension en sortie de l'alternateur et de la puissance active en sortie de l'alternateur. L'augmentation de la charge se traduit par une augmentation de la puissance active.

La vitesse de rotation du moteur thermique est liée à la fréquence de la tension en sortie de l'alternateur.

La valeur substituée selon l'invention à celle délivrée par le capteur de vitesse peut suivre une loi de commande prédéfinie visant à permettre au moteur de corriger la variation de la charge par un bon dosage de l'injection.

En l'absence de détection de l'augmentation de la charge en sortie de l'alternateur, la valeur délivrée par le capteur de vitesse du moteur thermique peut être utilisée en entrée de la boucle de régulation, le système de régulation selon l'invention reprenant un comportement « transparent » à l'égard du capteur de vitesse.

La substitution peut ainsi n'avoir lieu qu'en cas de variation de la charge.

La sortie de l'alternateur peut être reliée à un réseau triphasé, la vitesse nominale de rotation du moteur thermique étant par exemple de 1500 tr/min et la tension nominale de sortie entre phases de l'alternateur étant par exemple 400V.

L'invention permet d'améliorer entre autres le temps de réponse du groupe électrogène lorsque la charge varie.

La substitution selon l'invention de la valeur délivrée par le capteur de vitesse par une valeur prédéfinie peut se combiner avec d'autres mesures de régulation visant à améliorer le fonctionnement du groupe électrogène, par exemple des mesures visant à agir sur le fonctionnement de l'alternateur pour diminuer le courant d'excitation et réduire le couple lié à l'augmentation de la charge pendant la durée nécessaire à l'augmentation de la puissance du moteur.

L'invention a encore pour objet, selon un autre de ses aspects, un système de régulation de l'injection de carburant dans un moteur thermique d'un groupe électrogène pour mettre en oeuvre le procédé selon l'invention, le groupe électrogène comportant au moins un capteur de la vitesse du moteur thermique et un régulateur de vitesse comportant un calculateur d'injection, le régulateur de vitesse du moteur recevant en entrée un signal du capteur de vitesse et commandant l'injection du carburant, le système de régulation étant configuré pour :
- détecter une augmentation de la charge en sortie de l'alternateur, ou recevoir une information correspondante,
- lorsque l'augmentation de la charge est détectée, substituer à au moins une valeur délivrée par le capteur de vitesse au moins une valeur différente en entrée du régulateur de vitesse du moteur de manière à simuler un ralentissement du moteur, et ainsi amener le régulateur de vitesse du moteur à modifier le dosage de l'injection pour accélérer.

Ainsi, le système de régulation peut faire accélérer le moteur dès la détection de l'application de la charge avant même que le moteur ait réellement chuté en vitesse.

Le système de régulation peut être configuré pour, en l'absence de détection de l'augmentation de la charge en sortie de l'alternateur ou réception de l'information correspondante, utiliser dans la boucle de régulation la valeur délivrée par le capteur de vitesse du moteur thermique.

Le système de régulation peut détecter lui-même l'augmentation de la charge, à partir par exemple de la connaissance de la puissance délivrée par l'alternateur. En variante, le système de régulation reçoit cette information par exemple d'un régulateur de tension équipant l'alternateur.

Le système de régulation peut transmettre en régime de fonctionnement stationnaire les informations du capteur de vitesse au régulateur de vitesse du moteur thermique sans les modifier, mais dès qu'une augmentation de charge supérieure à un seuil prédéfini est détectée, le système de régulation peut modifier le signal envoyé au régulateur de vitesse pour lui faire croire que la vitesse du moteur a diminué, alors que la chute de vitesse n'est pas encore effective.

Un avantage d'un tel système de régulation est de pouvoir être installé sur des groupes électrogènes existants, sans modification du régulateur de vitesse du moteur thermique.

Toutes les caractéristiques de l'invention énumérées ci-dessus pour le procédé valent pour le système de régulation.

L'invention pourra être mieux comprise à la lecture de la description qui va suivre, d'un exemple non limitatif de mise en oeuvre de celle-ci, et à l'examen du dessin annexé, sur lequel :
- la figure 1 représente un groupe électrogène selon l'art antérieur,
- la figure 2 représente un groupe électrogène selon l'invention,
- la figure 3 illustre les relations entre différents éléments constitutifs du groupe électrogène selon l'invention, et
- les figures 4A, 4B et 4C représentent différents signaux lors de la mise en oeuvre du procédé selon l'invention.

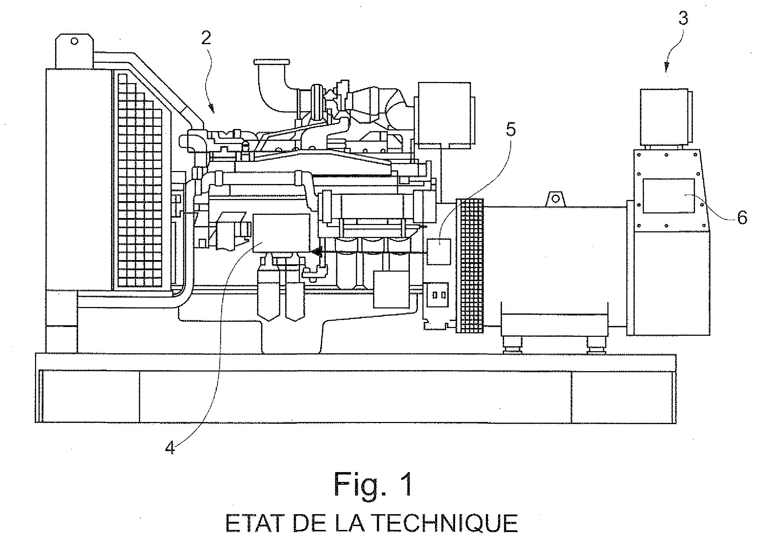

Un groupe électrogène selon l'art antérieur comporte, comme illustré à la figure 1, un moteur thermique 2 et un alternateur 3, auquel une charge, non représentée, est appliquée.

Le moteur 2 comporte un régulateur de vitesse 4 comportant un calculateur d'injection qui calcule l'injection (ou la commande des gaz) du moteur afin que la vitesse de rotation soit maintenue constante à une valeur prédéfinie qui dépend de la polarité de l'alternateur et de la fréquence du courant de sortie recherchée, par exemple 1500 tr/min pour une fréquence de 50 Hz.

Le moteur 2 comporte un capteur 5 de vitesse pouvant être, par exemple, inductif, capacitif ou optique.

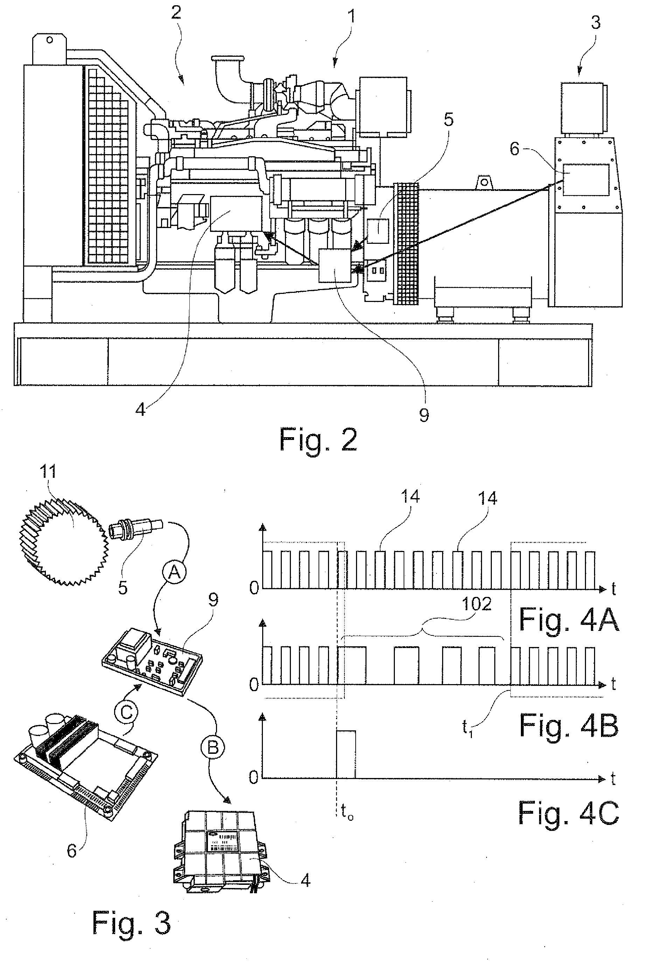

Le capteur 5 est par exemple disposé devant une couronne dentée 11 entraînée en rotation par le moteur, comme illustré à la figure 3, et délivre des impulsions 14 à une fréquence proportionnelle à la vitesse de rotation, comme illustré à la figure 4A.

Le régulateur de vitesse 4 reçoit le signal du capteur 5 et calcule le niveau d'injection de carburant adéquat pour maintenir la vitesse, sans avoir connaissance du niveau de charge appliqué à l'alternateur 3.

L'alternateur 3 comporte, comme illustré à la figure 1, un régulateur de tension 6, qui surveille la tension en sortie de l'alternateur et détermine le courant d'excitation à appliquer pour maintenir une amplitude de tension prédéfinie, par exemple 400 V triphasé.

Le groupe électrogène 1 selon l'invention comporte, comme illustré à la figure 2, un système de régulation 9 qui reçoit le signal du capteur de vitesse 5 et qui est relié au régulateur de vitesse 4 du moteur 2. Ce système de régulation 9 peut comporter un boîtier séparé du régulateur de vitesse 4 du moteur 2 et séparé également, le cas échéant, du régulateur de tension 6 de l'alternateur 3.

Le système de régulation 9 est agencé pour détecter une variation de charge, à partir de la connaissance de la tension en sortie de l'alternateur. En variante, c'est le régulateur de tension 6 qui assure cette détection et envoie l'information correspondante au système de régulation 9.

On a illustré à la figure 4C l'application d'un impact de charge à l'instant *t₀.*

Préalablement à l'application de l'impact de charge, en fonctionnement nominal, le système de régulation 9 retransmet de façon transparente au régulateur de vitesse 4 du moteur 2 le signal délivré par le capteur 5, comme illustré à la figure 4B.

Lorsque l'impact de charge a lieu à l'instant *t₀,* une variation de puissance est détectée par le système de régulation 9 ou par le régulateur de tension 6, et le système de régulation 9 envoie au régulateur de vitesse 4 du moteur 2 un signal de substitution 102, comme illustré à la figure 4B, avant que le capteur 5 ait détecté une variation de la vitesse.

Le signal de substitution 102 simule un ralentissement du moteur 2, ce qui amène le régulateur de vitesse 4 à augmenter la puissance du moteur pour accélérer et contrer ce ralentissement.

Le débit de carburant injecté dans le moteur thermique 2 est ainsi modifié par le système de régulation 9, par le biais du régulateur de vitesse 4.

Lorsque la tension mesurée en sortie de l'alternateur 3 traduit le fait que l'augmentation de la puissance du moteur 2 a contré la tendance au ralentissement liée à l'impact de la charge, c'est-à-dire lorsque le signal substitué devient sensiblement le même que le signal du capteur de vitesse 5 avant impact de charge, le système de régulation 9 peut à nouveau transmettre à l'instant *t₁* au régulateur de vitesse 4 le signal du capteur 5 de façon transparente, comme illustré à la figure 4B.

L'invention n'est pas limitée à l'exemple qui vient d'être décrit. Par exemple, d'autres mesures de régulation peuvent se combiner à l'invention.

L'expression « comportant un » doit être comprise comme étant synonyme de « comportant au moins un », sauf si le contraire est spécifié.

## Revendications

1. Procédé de régulation de l'injection de carburant dans un moteur thermique (2) d'un groupe électrogène (1) comprenant un alternateur (3) entraîné par le moteur thermique, le groupe électrogène comportant au moins un capteur (5) de la vitesse du moteur thermique (2) et mettant en oeuvre une boucle de régulation ayant au moins en entrée un signal provenant du capteur (5), le procédé comportant les étapes suivantes :
- détecter une augmentation de la charge en sortie de l'alternateur (3) à partir d'au moins une grandeur électrique en sortie de l'alternateur, et
- lorsqu'une augmentation de la charge est détectée, substituer à au moins une valeur délivrée par le capteur de vitesse (5) en entrée de la boucle de régulation au moins une valeur prédéfinie afin de faire accélérer le moteur dès la détection de l'application de la charge avant même que le moteur ait réellement chuté en vitesse.

2. Procédé selon la revendication 1, dans lequel la grandeur électrique en sortie de l'alternateur est représentative de l'un au moins du courant parcourant l'enroulement d'induit principal de l'alternateur, de la tension en sortie de l'alternateur et de la puissance active en sortie de l'alternateur.

3. Procédé selon l'une des revendications précédentes, dans lequel en l'absence de détection de l'augmentation de la charge en sortie de l'alternateur (3), la valeur délivrée par le capteur (5) est utilisée en entrée de la boucle de régulation.

4. Procédé selon l'une quelconque des revendications 1 à 3, la valeur prédéfinie dépendant du niveau de puissance.

5. Système de régulation (9) de l'injection de carburant pour un moteur thermique (2) d'un groupe électrogène (1) comprenant un alternateur (3) entraîné par le moteur thermique (2), le groupe électrogène (1) comportant au moins un capteur (5) de la vitesse du moteur thermique (2) et un régulateur de vitesse (4) comportant un calculateur d'injection, le régulateur de vitesse (4) du moteur recevant en entrée un signal du capteur de vitesse (5) et commandant l'injection du carburant, le système de régulation (9) étant configuré pour :
- détecter une augmentation de la charge en sortie de l'alternateur (3), ou recevoir une information correspondante,
- lorsque l'augmentation de la charge est détectée, substituer à au moins une valeur délivrée par le capteur de vitesse (5) au moins une valeur différente en entrée du régulateur de vitesse (4) du moteur (2) de manière à simuler un ralentissement du moteur, et ainsi amener le régulateur de vitesse (4) du moteur à modifier le dosage de l'injection pour accélérer, avant que le moteur ait réellement chuté en vitesse.

6. Système de régulation selon la revendication 5, étant configuré pour, en l'absence de détection de l'augmentation de la charge en sortie de l'alternateur (3) ou de réception de l'information correspondante, transmettre au régulateur de vitesse (4) du moteur (2) la valeur délivrée par le capteur de vitesse (5).

7. Système selon la revendication 5 ou 6, la valeur de substitution dépendant du niveau de puissance.

## Patentansprüche

1. Verfahren zur Regelung der Einspritzung von Kraftstoff in einen Verbrennungsmotor (2) eines Satzes elektrischer Generatoren (1), umfassend einen durch den Verbrennungsmotor angetriebenen Wechselstromgenerator (3), wobei der Satz elektrischer Generatoren zumindest einen Sensor (5) der Geschwindigkeit des Verbrennungsmotors (2) aufweist und einen Regelkreis bildet, der am Eingang zumindest ein vom Sensor (5) stammendes Signal aufweist, wobei das Verfahren die folgenden Schritte umfasst:
Detektieren einer Erhöhung der Last am Ausgang des Wechselstromgenerators (3) anhand zumindest einer elektrischen Größe am Ausgang des Wechselstromgenerators und,
wenn eine Erhöhung der Last detektiert wird, Ersetzen zumindest eines vordefinierten Wertes durch zumindest einen durch den Geschwindigkeitssensor (5) am Eingang des Regelkreises gelieferten Wert, um eine Beschleunigung des Motors ab der Detektieren der Belastung zu bewirken, noch bevor der Motor tatsächlich an Geschwindigkeit verloren hat.

2. Verfahren nach Anspruch 1, wobei die elektrische Größe am Ausgang des Wechselstromgenerators repräsentativ zumindest für den Strom, der durch die Hauptankerwicklung des Wechselstromgenerators fließt, die Spannung am Ausgang des Wechselstromgenerators und/oder die Wirkleistung am Ausgang des Wechselstromgenerators ist.

3. Verfahren nach einem der vorangehenden Ansprüche, wobei, wenn keine Erhöhung der Last am Ausgang des Wechselstromgenerators (3) detektiert wird, der durch den Sensor (5) gelieferte Wert am Eingang des Regelkreises genutzt wird.

4. Verfahren nach einem der Ansprüche 1 bis 3, wobei der vordefinierte Wert vom Leistungspegel abhängt.

5. System zur Regelung (9) der Einspritzung von Kraftstoff für einen Verbrennungsmotor (2) eines Satzes elektrischer Generatoren (1), umfassend einen durch den Verbrennungsmotor (2) angetriebenen Wechselstromgenerator (3), wobei der Satz elektrischer Generatoren (1) zumindest einen Sensor (5) der Geschwindigkeit des Verbrennungsmotors (2) und einen einen Einspritzrechner aufweisenden Geschwindigkeitsregler (4) aufweist, wobei der Geschwindigkeitsregler (4) des Motors am Eingang ein Signal des Geschwindigkeitssensors (5) empfängt und die Einspritzung des Kraftstoffs steuert, wobei das Regelungssystem (9) dazu gestaltet ist:
- eine Erhöhung der Last am Ausgang des Wechselstromgenerators (3) zu detektieren oder eine entsprechende Information zu empfangen,
- wenn eine Erhöhung der Last detektiert wird, zumindest einen anderen Wert am Eingang des Geschwindigkeitsreglers (4) des Motors (2) durch zumindest einen vom Geschwindigkeitssensor (5) gelieferten Wert zu ersetzen, um eine Verlangsamung des Motors zu simulieren und so den Geschwindigkeitsregler (4) des Motors dazu zu veranlassen, die Einspritzdosierung zu verändern, um zu beschleunigen, bevor der Motor tatsächlich an Geschwindigkeit verloren hat.

6. Regelungssystem nach Anspruch 5, das dazu gestaltet ist, wenn keine Erhöhung der Last am Ausgang des Wechselstromgenerators (3) detektiert oder keine entsprechende Information empfangen wird, den vom Geschwindigkeitssensor (5) gelieferten Wert an den Geschwindigkeitsregler (4) des Motors (2) zu übertragen.

7. System nach Anspruch 5 oder 6, wobei der Ersatzwert vom Leistungspegel abhängt.

## Claims

1. Method for regulating the injection of fuel into a fuel engine (2) of a generator set (1) comprising an alternator (3) driven by the fuel engine, the generator set having at least one sensor (5) of the speed of the fuel engine (2) and implementing a regulation loop having at least as input a signal originating from the sensor (5), the method comprising the following steps:
- detecting an increase in the load at the output of the alternator (3) based on at least one electrical quantity at the output of the alternator, and
- when an increase in the load is detected, replacing at least one value delivered by the speed sensor (5) as input for the regulation loop with at least one predefined value in order to accelerate as soon as the application of the load is detected even before the engine has actually dropped in speed.

2. Method according to Claim 1, in which the electrical quantity at the output of the alternator is representative of at least one of the current flowing through the main armature winding of the alternator, the voltage at the output of the alternator and the active power at the output of the alternator.

3. Method according to one of the preceding claims, in which, in the absence of detection of the increase in the load at the output of the alternator (3), the value delivered by the sensor (5) is used as input for the regulation loop.

4. Method according to any one of Claims 1 to 3, the predefined value depending on the power level.

5. System (9) for regulating the injection of fuel into a fuel engine (2) of a generator set (1) comprising an alternator (3) driven by the fuel engine (2), the generator set (1) including at least one sensor (5) of the speed of the fuel engine (2) and a speed regulator (4) comprising an injection computer, the speed regulator (4) of the engine receiving as input a signal from the speed sensor (5) and controlling the injection of the fuel, the regulation system (9) being configured to:
- detect an increase in the load at the output of the alternator (3), or receive a corresponding indication,
- when the increase in the load is detected, replace at least one value delivered by the speed sensor (5) with at least one different value as input for the speed regulator (4) of the engine (2) so as to simulate a slowing down of the engine, and thus cause the speed regulator (4) of the engine to modify the dosage of the injection in order to accelerate.

6. Regulation system according to Claim 5, being configured to, in the absence of detection of the increase in the load at the output of the alternator (3) or of reception of the corresponding indication, transmit to the speed regulator (4) of the engine (2) the value delivered by the speed sensor (5).

7. System according to Claim 5 or 6, the replacement value depending on the power level.
